# EUROPEAN PATENT APPLICATION

(11) **EP 2 875 994 A2**
(43) Date of publication of application: **27.05.2015**
(21) Application number: 14020084.1
(22) Date of filing: 12.11.2014
(51) Int. Cl.: B60Q 1/30, B60Q 1/56

(54) **Trailer Light Arrangement**

(30) Priority: 22.11.2013 GB 201320680
(71) Applicant: Rodway, James, Gloucestershire GL2 9HE (GB)
(72) Inventor: Rodway, James, Gloucestershire GL2 9HE (GB)
(74) Representative: Bailey, Richard Alan

(57) **Abstract**

A trailer light arrangement comprises an elongate flexible tubular housing (30) of transparent or translucent form, the housing (30) containing a wiring harness (34), a plurality of LEDs (36) being electrically connected to the wiring harness (34) and located within the housing (30), the harness (34) including or being connected to a cable (38) which extends from the housing (30) to a plug (40) for connection to a socket carried by a towing vehicle, in use.

## Description

This invention relates to a light arrangement for use with a trailer. The term 'trailer' as used herein is intended to mean any wheeled arrangement intended to be towed by a vehicle, and includes, for example, box trailers, caravans, trailer tents, and the like. However, it is not limited in this regard.

Cars, vans and the like which are commonly used in the towing of trailers include a number of warning lamps located at the rear thereof and intended to provide indications to the drivers of following vehicles as to the intentions of the driver of the vehicle. By way of example, it is usual for direction indicator lamps to be present, providing an indication of the direction the vehicle is intending to turn, for example when at a road junction. Brake lights providing an indication that the vehicle is braking are also present. Additionally, tail lamps are present intended to be illuminated at night or when visibility is poor to make the presence of the vehicle more apparent to a driver of a following vehicle.

Clearly, where the vehicle is being used to tow a trailer, the presence of the trailer to the rear of the vehicle may obscure or partially obscure the warning lamps provided on the vehicle.

It is usual for a trailer to include a light board including a series of lamps, the illumination of which is controlled by the vehicle, the lamps serving to duplicate or repeat the function of the warning lamps present on the rear of the towing vehicle and which are obscured by the presence of the trailer. In many countries regulations require that such a light board or an equivalent arrangement is provided when towing.

A typical light board comprises a panel upon which are mounted clusters of lamps. For example, a left lamp cluster and a right lamp cluster may be provided, each of which includes a brake light, a direction indicator light and a tail light. Each cluster may take the form of a series of light bulbs mounted in associated mounting sockets, and located behind a coloured glass or plastics material lens or cover. An appropriate electrical cable is connected to the mountings, the free end of the cable being connected to a plug, typically a 7 pin plug to be received by a socket mounted to the rear of the towing vehicle so that the operation of the lamps of each cluster can be controlled from the vehicle. The light board may also carry a number plate or license plate matching that of the towing vehicle, and may include lights arranged to illuminate the number or license plate. Additional lights may be present. For example, a reversing indicator light and/or a high intensity fog light may be present.

Light boards of this type are typically of relatively large dimensions and thus are inconvenient to handle and store when not in use. Where a towing vehicle is used with a number of different trailers, it may be desired to store the light board within the vehicle when not in use, so that it is at hand when required. Clearly, this would be inconvenient with a light board of the type mentioned hereinbefore. Additionally, with light boards of the type described hereinbefore there is the risk of individual light bulbs working loose, for example as a result of shaking and vibrations experienced over time, preventing those bulbs from operating. Clearly, this may impair the performance of the light board, reducing safety and potentially breaching local regulations. Furthermore, the covers or lens of such a light board are reasonably fragile and can become brittle over time. As a result, they are easily broken either whilst the light board is in storage or out of use, and also whilst the light board is in use, for example arising from minor impacts or collisions.

It is an object of the invention to provide a trailer light arrangement in which at least some of the disadvantages set out hereinbefore in relation to known light boards are overcome or are of reduced effect.

According to the present invention there is provided a trailer light arrangement comprising an elongate flexible tubular housing of transparent or translucent form, the housing containing a wiring harness, a plurality of LEDs being electrically connected to the wiring harness and located within the housing, the harness including or being connected to a cable which extends from the housing to a plug for connection to a socket carried by a towing vehicle, in use.

The plug may be a 7 pin plug. The pins of the plug may be of, for example, square, rectangular or round cross-sectional shape.

Such a trailer light arrangement is advantageous in that the provision of a flexible tubular housing reduces the risk of breakage thereof. The housing, with the harness and LEDs located therein, can be rolled or coiled for storage when not in use. Consequently, the handling and storage issues associated with the typical trailer board are overcome. It will be appreciated that whilst rolled or coiled in this fashion, the trailer light arrangement may be stowed in, for example, the boot or glove box of a vehicle so that it is at hand ready for use, if desired. The LEDs have a long working life and their operation is reliable, there being no risk of them working loose.

The housing is conveniently of a clear or substantially clear material, preferably of a suitable plastics material. By way of example, the housing may be of circular or substantially circular cross-sectional shape, for example having a diameter of approximately 15mm. The housing is conveniently sealed at its ends to provide a substantially watertight enclosure for the harness and LEDs.

The LEDs are conveniently grouped together such that the LEDs define a left hand indicator group, a right hand indicator group, a brake light group and a tail light group. The brake light group may be divided into a left hand brake light sub-group and a right hand brake light sub-group. Likewise the tail light group may be divided into left hand and right hand tail light subgroups. All of the LEDs of each group are conveniently controlled together such that when desired, the entire, for example, left hand indicator group is illuminated. The manner in which the LEDs are connected to the harness is preferably such that in the event of the failure of an individual LED within a particular group, the remaining LEDs within that group can continue to operate normally. As a consequence, it will be appreciated that the reliability of the trailer light arrangement is further enhanced.

If desired, additional LEDs or LED groups may be provided, for example to function as reversing and/or fog lamps, and/or to serve to illuminate a number plate or license plate.

The trailer light arrangement may further comprise mounting means for securing the housing to a trailer. The mounting means may comprise, for example, brackets or clips mounted upon to the trailer to which the housing can be secured. The brackets or clips are conveniently located so as to be positioned between adjacent groups of LEDs, for example between the LEDs serving to provide a direction indicator function and the LEDs serving to provide a brae light function, or the like. Alternatively, the trailer may be provided with, for example, a locating recess or channel adapted to receive the housing, in use. For example, a box section retaining housing could be secured to the trailer in which the housing containing the harness and LEDs is located and secured, in use.

Where LEDs are provided to serve to illuminate a number plate or license plate, shield means may be provided to reduce or prevent the direct emission of light to the rear of the trailer. If desired, the shield means may incorporate a reflector arranged to reflect incident light towards the number plate or license plate.

The invention will further be described, by way of example, with reference to the accompanying drawings, in which:
Figure 1 is a diagrammatic representation of the rear of a trailer to which a typical light board is mounted;
Figure 2 is a diagrammatic representation illustrating the rear of a trailer to which a trailer light arrangement in accordance with one embodiment of the invention is mounted; and
Figure 3 is a diagrammatic cross-sectional view illustrating part of the trailer light arrangement of Figure 2.

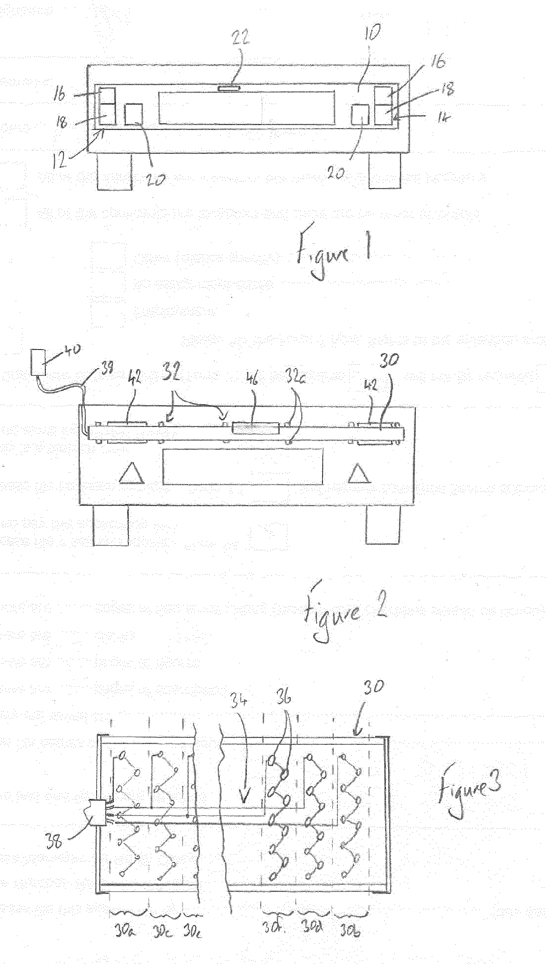

Referring firstly to Figure 1, as described hereinbefore a typical light board comprises a rigid panel 10, for example of timber construction, upon which is mounted a left hand light cluster 12 and a right hand light cluster 14. Each light cluster 12, 14 includes a tail light section 16, a brake light section 18 and a direction indicator light section 20. Each section includes a light bulb mounted in a suitable socket and located behind a coloured glass or plastics material cover or lens. As mentioned above, there is a risk with such an arrangement that one or more of the bulbs may work loose and become inoperable. Furthermore, either during use or whilst in storage, one or more of the covers or lens may become damaged. If a cover or lens becomes damaged then the associated bulb may become exposed. This, in turn, may result in the bulb itself failing, for example if it becomes wet. Additionally, as the coloured cover or lens provides the appropriate light colour, where a cover or lens is broken, the driver of a following vehicle may see that one of the lights is illuminated but be unable to identify the function of the light and so not be aware of whether the towing vehicle is, for example, braking or turning. Accordingly, the risk of an accident is increased. Furthermore, local regulations may be being breached.

The panel 10 is of rigid form. Consequently, the light board is of relatively large dimensions and so is inconvenient to handle and store. Due to its size, accommodation of the trailer light board within a vehicle when the trailer board is not in use is inconvenient. Consequently, the light board may not be at hand when required.

In addition to the left and right light clusters, other lights may be present. For example, a light 22 for illuminating a number plate or license plate may be provided. Other lights serving a fog light or reversing lights may be provided.

Referring next to Figure 2, a trailer light arrangement in accordance with one embodiment of the invention is illustrated. The trailer light arrangement comprises an elongate tubular housing 30 of flexible form. Conveniently it is of a suitable flexible plastics material. The material of the housing 30 is of transparent or translucent form. The housing 30 is secured to the rear of a trailer, in use, using any suitable mounting means. In the arrangement illustrated, the mounting means take the form of a series of clips 32 mounted to the rear of the trailer, each clip 32 including a pair of resilient arms 32a which together define a recess of part circular cross-sectional shape. The housing 30 is secured in position by pushing the housing 30 into the recess of each clip 32, forcing the arms 32a apart, the resilience of the arms 32a returning the arms 32a to substantially their original position once the housing 30 is located within the recess of each clip 32, the arms 32a retaining the housing 30 in position. It will be appreciated that, as illustrated, the clips 32 are arranged in a substantially straight line across the rear of the trailer, thus supporting the housing 30 in the manner shown. The number of clip 32 used will depend upon, for example, the length of the housing 30, but sufficient clips 32 are provided to ensure that the housing is rigidly secured in position. It is envisaged that the housing 30 may be supplied in a range of lengths to suit styles of trailer. For example, it may be available in 3 foot and 6 foot lengths.

The housing 30 is conveniently of circular or substantially circular cross-sectional shape, having diameter in the region of 15mm. It will be appreciated, however, that the invention is not restricted in this regard and that other shapes and dimensions are possible without departing from the scope of the invention.

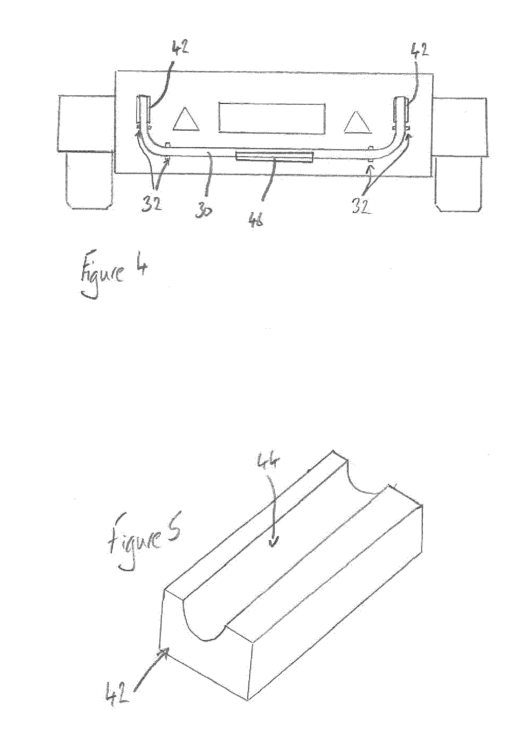

Whilst illustrated as extending in a straight line, it will be appreciated that this need not be the case, and the housing 30 may be bent to a desired shape, for example to follow chosen contours or dimensions of the trailer. Figure 4 illustrates an option in which end parts of the housing 30 are curved upwardly. It will be understood that this represents just one of a wide range of alternative shapes.

As best shown in Figure 3, within the housing 30 is located a wiring harness 34 composed of a series of individual cables. Electrically connected to the cables of the harness 34 are a series of LEDs 36. The manner in which the LEDs 36 are connected is such that failure of an individual LED 36 does not impact upon the operation of others of the LEDs 36. At one end, the harness 34 is electrically connected to a multicore cable 38 which extends from the housing 30 and is electrically connected at its free end to a standard 7 pin plug 40 or the like for connection to a corresponding socket mounted to the rear of a towing vehicle so that the operation of the LEDs 36 can be controlled from the vehicle. The nature of the plug 40 depends upon the nature of the socket to which it is to be connected, in use. By way of example, the plug 40 may be of square or round pin form. It is envisaged that there will be no need to provide an external power block function to drive the operation of the LEDs 36, however arrangements having this functionality are possible without departing from the scope of the invention.

The LEDs 36 are divided into a series of groups, and the connection of the LEDs 36 to the harness 34 is such that all of the LEDs within each group of LEDs 36 are illuminated together. Accordingly, as shown in Figure 3, the LEDs 36 form a left hand indicator group comprising the LEDs 36 located within a first region 30a of the housing 30, the LEDs 36 of which are all electrically connected together by the harness 34 and coupled to the cable 38. The LEDs 36 further form a right hand indicator group comprising the LEDs 36 located within a second region 30b of the housing 30, the LEDs 36 of this group being electrically connected to one another by the harness 34 and coupled to other conductors of the cable 38 such that the left hand and right hand indicator groups can be controlled independently of one another.

In addition, the LEDs 36 form a brake light group comprising those LEDs 36 located within third and fourth regions 30c, 30d of the housing 30. It will be appreciated, therefore, that this group is split into left and right subgroups. The LEDs of each subgroup are electrically connected to one another, and the two subgroups are electrically connected together and connected to the cable 38 so that the LEDs 36 of the entire group, ie both subgroups, are illuminated together.

Likewise, the LEDs 36 form a tail light group composed of those LEDs 36 located within fifth and sixth regions 30e, 30f, again the group being split into two subgroups, the LEDs 36 of the entire group being operable together.

Whilst not illustrated in Figure 3, the LEDs 36 may further define groups serving as, for example, fog lights, reversing lights and/or number plate or license plate illumination lights.

The colours of the LEDs 36 in each group are chosen to comply with local regulations. Accordingly, in the UK, the LEDs 36 in the groups serving as direction indicator lights will have an amber coloured output, those in the groups serving as tail lights, brake lights and fog lights will have a red coloured output, and those in the groups serving as reversing lights and/or number plate illumination lamps will have a white output. The number and type of LEDs 36 present in each group is selected to ensure that a desired level of brightness or light output is achieved thereby, for example to ensure that local regulations are complied with. Likewise the size area over which the LEDs 36 of each group extend may be selected to ensure that local regulations are complied with.

The clips 32 may take a wide range of forms, as mentioned above. The clips 32 are conveniently positioned between adjacent ones of the groups of LEDs 36, for example between the groups of LEDs 36 serving to provide a direction indicator function and those serving to provide a brae warning function, or the like. If desired, support blocks 42 may be secured to the rear of the trailer, the blocks 42 defining a channel 44 (see Figure 5) arranged to receive the adjacent parts of the housing 30. It will be appreciated that the blocks 42 serve to maintain the adjacent parts of the housing 30 in the desired locations. Conveniently, the channel 44 is coated or provided with a reflective material layer, the reflective material reflecting light incident thereon away from the rear of the trailer, thereby enhancing the light intensity when the arrangement is viewed from the rear of the trailer. The blocks 42 are conveniently of polycarbonate or the like form, and so are flexible, accommodating relatively minor impacts thereto. Damage to the block 42 and to the housing 30 when supported by the blocks 42 is thus reduced.

Where, as shown in Figure 4, the housing 30 includes curved regions, then certain of the blocks 42 may be shaped to support the housing 30 in its curved configuration.

Where certain of the LEDs 36 are arranged to provide a number plate or license plate illumination function, then it may be desired for a shield 46 to be provided to reduce or prevent the transmission of light from these ones of the LEDs 36 from the rear of the trailer. The shield 46 may incorporate a reflective material so as to direct light incident thereon towards the number plate or license plate.

In use, with the trailer light arrangement secured to the rear of a trailer, the trailer being towed by a towing vehicle and the plug 40 being connected to an appropriate socket of the towing vehicle, it will be appreciated that if the driver of the towing vehicle operates his direction indicators then not only will the associated ones of the towing vehicle direction indicator lights flash as usual, but also the LEDs 36 of the left hand or right hand indicator light groups will also flash, as appropriate, to provide a direction indication to a following vehicle. Similarly, if the driver applies the brakes or switches on the vehicles tail lights, the corresponding groups of LEDs 36 will be illuminated.

The LEDs 36 of each group are coloured so as to ensure that the illumination provided thereby is as desired. For example, where used in the UK, the LEDs 36 of the left and right hand indicator groups emit amber coloured light when operating, and the LEDs 36 of the brake and tail light groups emit red light when illuminated. It will be appreciated that the colours of the LEDs 36 are chosen to comply with local regulations. Likewise, if regulations require that, for example, the brake lights need to be of at least a certain area, then the sizes of the regions of the housing, and numbers of LEDs 36 located therein, may be modified accordingly.

The ends of the housing 30 are conveniently closed by watertight end caps so as to form a watertight enclosure for the harness 34 and LEDs 36. The nature of the housing 30 is such that is it flexible, and so is less likely to fracture than a conventional arrangement.

It will be appreciated that the trailer light arrangement described hereinbefore is advantageous in that operation thereof is reliable. As the housing is of a flexible, resilient material, the risk of damage thereto is reduced. The housing can be coiled or rolled-up for storage.

Whilst one embodiment of the invention is described hereinbefore, it will be appreciated that a number of modifications and alterations may be made thereto without departing from the scope of the invention. By way of example, other techniques may be used to mount the housing 30 to a trailer. One possibility would be to provide the trailer with a support or retainer housing, for example of box-like form, defining a channel in which the housing 30 can be secured, in use. This represents just one of many possibilities, and a number of other approaches may be taken without departing from the scope of the invention.

## Claims

1. A trailer light arrangement comprising an elongate flexible tubular housing of transparent or translucent form, the housing containing a wiring harness, a plurality of LEDs being electrically connected to the wiring harness and located within the housing, the harness including or being connected to a cable which extends from the housing to a plug for connection to a socket carried by a towing vehicle, in use.

2. An arrangement according to Claim 1, wherein the plug is a 7 pin plug.

3. An arrangement according to Claim 1 or Claim 2, wherein the housing is of a clear or substantially clear material.

4. An arrangement according to any of the preceding claims, wherein the housing is of a suitable plastics material.

5. An arrangement according to any of the preceding claims, wherein the housing is of substantially circular cross-section.

6. An arrangement according to any of the preceding claims, wherein the housing is sealed at its ends to provide a substantially watertight enclosure for the harness and LEDs.

7. An arrangement according to any of the preceding claims, wherein the LEDs are grouped together such that the LEDs define a left hand indicator group, a right hand indicator group, a brake light group and a tail light group.

8. An arrangement according to Claim 7, wherein the housing defines a left hand indicator group region containing the LEDs of the left hand indicator group and a right hand indicator group region containing the LEDs of the right hand indicator group.

9. An arrangement according to Claim 7 or Claim 8, wherein the brake light group is divided into a left hand brake light sub-group and a right hand brake light sub-group, and optionally wherein the housing defines a left hand brake light subgroup region containing the LEDs of the left hand brake light sub group and a right hand brake light subgroup region containing the LEDs of the right hand brake light subgroup.

10. An arrangement according to any of Claims 7 to 9, wherein the tail light group is divided into a left hand tail light sub-group and a right hand tail light sub-group, and optionally wherein the housing defines a left hand tail light subgroup region containing the LEDs of the left hand tail light sub group and a right hand tail light subgroup region containing the LEDs of the right hand tail light subgroup.

11. An arrangement according to any of Claims 7 to 10, wherein all of the LEDs of each group are controlled together.

12. An arrangement according to any of Claims 7 to 11, wherein the manner in which the LEDs are connected to the harness is such that in the event of the failure of an individual LED within a particular group, the remaining LEDs within that group can continue to operate normally.

13. An arrangement according to any of Claims 7 to 12, further comprising additional LEDs or LED groups to function as reversing and/or fog lamps, and/or to serve to illuminate a number plate or license plate, and optionally further comprising shield means restricting or preventing light emitted from LEDs serving to illuminate the number plate or license plate from being viewed directly from the rear of a trailer to which the arrangement is fitted, and wherein the shield means optionally includes a reflector.

14. An arrangement according to any of the preceding claims, further comprising mounting means for securing the housing to a trailer.

15. An arrangement according to Claim 14, wherein the mounting means comprise brackets or clips mounted upon to the trailer to which the housing can be secured and/or wherein the mounting means includes a support block shaped to provide support to the housing, and optionally wherein the support block defines a housing receiving channel, the housing receiving channel optionally being provided with a reflective material.
